# EUROPEAN PATENT APPLICATION

(11) **EP 1 519 278 A1**
(43) Date of publication of application: **30.03.2005**
(21) Application number: 04011577.6
(22) Date of filing: 14.05.2004
(51) Int. Cl.: G06F 13/38

(54) **Device for transferring data between memory cards**

(30) Priority: 23.09.2003 CN 03249006
(71) Applicant: MICROTEK INTERNATIONAL INC., Hsinchu 30077 (TW)
(72) Inventor: Youe, Ching-Twu, Based Industial Park Hsinchu, 30077 (TW)
(74) Representative: Casalonga, Axel

(57) **Abstract**

A multi-card data transfer device comprises a microprocessor for controlling and processing actions between each component. The microprocessor is connected with two slots via two multi-card interfaces. The two slots are provided for electrically connecting with two memory cards, and the microprocessor can perform read/write data transfer actions to the two memory cards. A key module is connected with the microprocessor to provide an operation interface for users. A power supply provides the required power for all components. Data in different memory cards can be directly exchanged and backuped to accomplish the effects of fast integration of data, easy operation and convenient data management.

## Description

### Field of the invention

The present invention relates to a data transfer device and, more particularly, to a multi-card data transfer device capable of functioning independently and directly transferring data to and from two memory cards.

### Background of the invention

Along with continual development of the information industry, various kinds of electronic information products like mobile phones, notebook computers, personal digital assistants (PDAs), digital still cameras (DSCs) and so on provide different applications such as multimedia entertainments and data transmission via networks in everyday life. These portable electronic products usually require small memory cards for storage of various kinds of electronic data. Therefore, small memory cards like Secured Digital (SD) cards, Compact Flash (CF) cards, Smart Media (SM) cards and Multi Media Card (MMC) are widely used in various electronic products.

Different kinds of electronic products usually adopt memory cards of different formats. Even electronic products of the same kind may adopt memory cards of different formats if their brands are different. Therefore, the same electronic device can't directly perform read/write and transfer of data for various memory cards of different formats. A card reader is required instead for data exchange. However, a card reader can't work independently. It is necessary to connect a computer so that the computer can perform data exchange through the card reader, hence resulting in much inconvenience in use.

Accordingly, the present invention aims to propose a multi-card data transfer device capable of directly performing data transfer without connection with a computer.

### Summary of the invention

The primary object of the present invention is to provide a multi-card data transfer device for direct exchange and backup of data in various memory cards to effectively and fast integrate data between different memory cards.

Another object of the present invention is to provide a multi-card data transfer device capable of independently performing data exchange between different memory cards without control of a computer, hence accomplishing the advantages of easy and convenient operation.

Another object of the present invention is to provide a multi-card data transfer device having a USB interface so that data in different memory cards and USB memory devices can exchange to expand the application range and also effectively enhance the convenience in data management.

Another object of the present invention is to let a multi-card data transfer device be used as a card reader for editing and backup of data in a computer or memory cards after connection with the computer via a computer connection interface.

According to the present invention, a multi-card data transfer device comprises two slots, a microprocessor, a key module and a power supply. Each of the slots has a multi-card interface. The microprocessor is connected with the two multi-card interfaces for sending read/write commands of memory cards of various formats to the two multi-card interfaces so that the microprocessor can perform read/write actions to two memory cards via the two multi-card interfaces. The microprocessor is also connected with the key module for providing an operation interface for users. The power supply is used to provide the required power for each of the above components.

The various objects and advantages of the present invention will be more readily understood from the following detailed description when read in conjunction with the appended drawing, in which:

### Brief description of the drawings:

Fig. 1 is a block diagram of the hardware structure of the present invention;
Fig. 2 is a block diagram of the detailed structure of a control circuit of the present invention;
Fig. 3 is a perspective view of the present invention; and
Fig. 4 is a light status diagram of the present invention.

### Detailed description of the illustrative embodiments

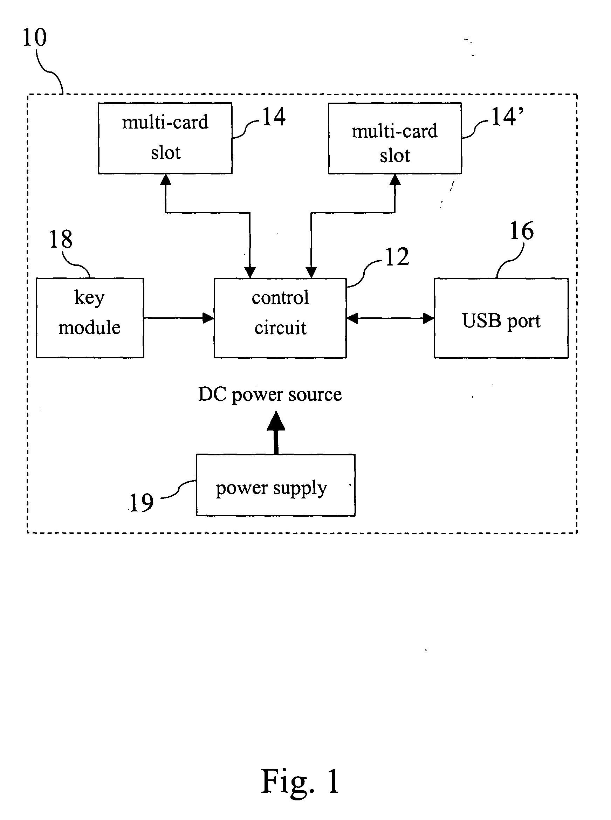

As shown in Fig. 1, a multi-card data transfer device 10 comprises a control circuit 12 responsible for the control of actions of the whole device. The control circuit 12 is electrically connected with two multi-card slots 14 and 14', a USB port 16 and a key module 18. The two multi-card slots 14 and 14' are used for insertion of two memory cards, which can be memory cards of different formats. The memory cards can be Secured Digital (SD) cards, Multi Media Card (MMC), Smart Media (SM) cards, Memory Stick (MS) cards, Compact Flash (CF) cards, PCMCIA memory cards and xD-Picture cards. The USB port 16 is used for insertion of a USB memory device. Memory cards and USB memory devices can be electrically connected together for data exchange. The key module 18 provides an operation interface for users. A power supply 19 is used to provide the required power for each of the above components.

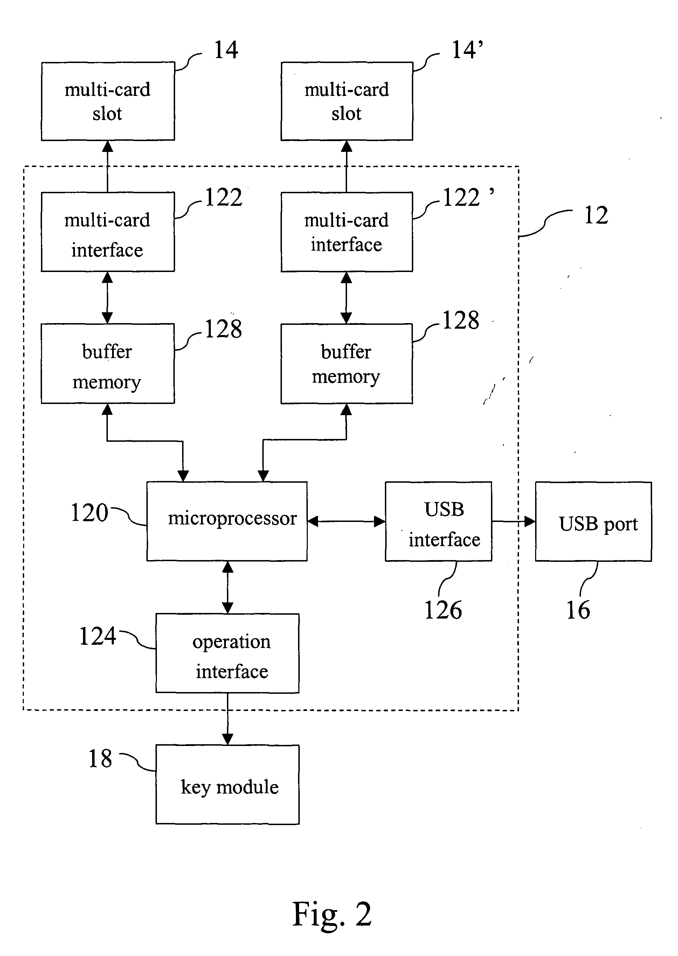

As shown in Fig. 2, the control circuit 12 comprises a microprocessor 120, two multi-card interfaces 122 and 122', an operation interface 124 and a USB interface 126, and two buffer memories 128. The microprocessor 120 is used to control and process actions of each component in the control circuit 12. The microprocessor 120 is electrically connected with the two multi-card interfaces 122 and 122', which are electrically connected with the two multi-card slots 14 and 14'. Each of the multi-card slots 14 and 14' is used for electric connection with a memory card and reception of read/write commands from the microprocessor to memory cards of various formats for performing read/write actions to the memory card. Through the operation interface 124, the microprocessor 120 is electrically connected to the key module 18. The operation interface 124 is programmable. The USB interface 126 is electrically connected to the USB port 16 for USB interface transmission. The two buffer memories 128 are disposed between the microprocessor 120 and the two multi-card interfaces 122 and 122'. Data in the buffer memories 128 are moved in the unit of block to enhance the speed and stability of data transmission.

Besides, the microprocessor 120 is also connected with a computer connection interface (not shown) for connection with a computer so that the multi-card data transfer device 10 can be used as a card read for editing and backup of data in the computer or the memory card. After the multi-card data transfer device 10 is connected with a computer via the computer connection interface, the computer will provide the required power for each component in the multi-card data transfer device 10.

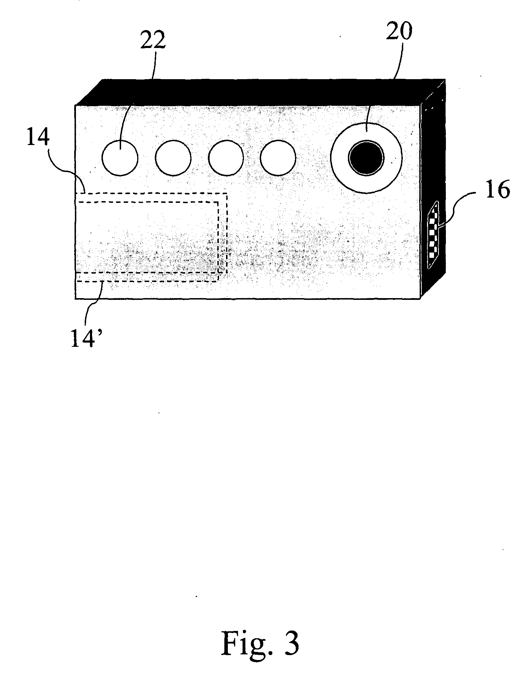

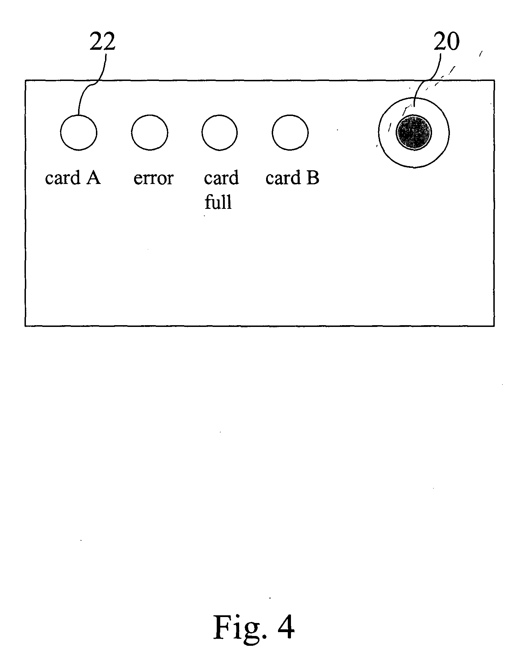

As shown in Fig. 3, in the multi-card data transfer device 10, the key module 18 comprises a key 20 and a display. The key 20 is pressed for simple setting and option confirmation. The display is composed of four display lights 22. The four display lights are usually LEDs respectively displaying the operation and use statuses of memory cards in the two slots 14 and 14'. As shown in Fig. 4, the four display lights 22 represent the statuses of connection confirmation of card A, operation error, memory card full and connection confirmation of card B, respectively. Through the on/off or glittering states of these display lights 22, the operation and use statuses of two memory cards A and B inserted in the two multi-card slots 14 and 14' can be known. The display can also be a display panel like an LCD.

When the multi-card data transfer device is used to perform exchange of data in two memory cards A and B, the two memory cards A and B are first inserted into the two multi-card slots 14 and 14', respectively. Next, connection interfaces of the two multi-card interfaces 122 and 122' are switched to corresponding interface formats of the inserted memory cards. Meanwhile, as shown in Fig. 4, after the two memory cards A and B are electrically connected with the two slots 14 and 14', the display lights for card A and card B will be on. The user can then transfer data in memory card A to memory card B or vice versa through simple operations of the key 20. During data transfer, if there is an error or the capacity of some memory card is full, the light for error or card full will be on to inform the user.

To sum up, the multi-card data transfer device of the present invention can directly exchange and backup data is various different memory cards to effectively and fast integrate data between different memory cards, hence solving the problem of difficult integration of data between different memory cards in the prior art. Moreover, the present invention can independently perform data exchange between different memory cards without connection with a computer, hence having the advantages of easy and convenient operation. Besides, the present invention can exchange data between different memory cards and USD memory devices to enhance convenience in data management. Therefore, the present invention not only can effectively solve the problem of difficult management of various memory cards in the prior art when used independently, but also can be used as a card reader after connection with a computer. In other words, the present invention is a very convenient and practical data management tool.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. A multi-card data transfer device comprising:
a microprocessor for controlling and processing actions between each component;
at least two slots each having a multi-card interface, each said multi-card interface being electrically connected with said microprocessor and provided for electrically connecting with a memory card and used for receiving read/write commands of said microprocessor for memory cards of various formats of so that said microprocessor can perform read/write actions to said memory card;
a key module connected with said microprocessor and providing an operation interface for users; and
a power supply providing the required power for each said component.

2. The multi-card data transfer device as claimed in claim 1, wherein said microprocessor is further connected with a USB interface.

3. The multi-card data transfer device as claimed in claim 1, wherein said memory card that can be read and written by each said multi-card interface is one selected from the group composed of Secure Digital card, Multi Media Card, Smart Media card, Memory Stick card, Compact Flash card, PCMCIA memory card and xD-Picture card.

4. The multi-card data transfer device as claimed in claim 1, wherein two buffer memories are further connected between said microprocessor and said two multi-card interfaces.

5. The multi-card data transfer device as claimed in claim 1, wherein said key module is programmable.

6. The multi-card data transfer device as claimed in claim 1, wherein said key module comprises:
at least a key; and
a display used for displaying the operation and use statuses of said multi-card data transfer device.

7. The multi-card data transfer device as claimed in claim 6, wherein said display comprises several display lights.

8. The multi-card data transfer device as claimed in claim 6, wherein said display is a display panel.

9. The multi-card data transfer device as claimed in claim 6, wherein said display is selected from a LED display and a LCD.

10. The multi-card data transfer device as claimed in claim 1, wherein said microprocessor is further connected with a computer connection interface for connection with a computer to accomplish bidirectional communication with said computer, and said computer provides the required power for each said component in said multi-card data transfer device.
